# FASCICULE DE BREVET EUROPEEN

(11) **EP 2 530 780 B1**
(45) Date de publication et mention de la délivrance du brevet: **11.03.2015**
(21) Numéro de dépôt: 11168535.0
(22) Date de dépôt: 01.06.2011
(51) Int. Cl.: H01M 16/00, H01M 8/04

(54) **Procédé de gestion du fonctionnement d'un système hybride**
Steuerungsverfahren der Funktion eines Hybridsystems
Method for managing the operation of a hybrid system

(43) Date de publication de la demande: 05.12.2012
(73) Titulaire: Belenos Clean Power Holding AG, 2502 Bienne (CH)
(72) Inventeur: Bernard, Jérôme, 5400 Baden (CH)
(74) Mandataire: Ravenel, Thierry Gérard Louis

(56) Documents cités:
- EP-A1- 2 241 473
- EP-A1- 2 320 504
- US-A1- 2003 044 658
- US-A1- 2004 185 317

## Description

La présente invention concerne un procédé de fonctionnement de gestion du fonctionnement d'une alimentation en courant continu hybride, ladite alimentation comprenant une pile à combustible, une batterie et un convertisseur DC/DC comportant une entrée et une sortie, l'entrée du convertisseur étant reliée à la sortie de la pile à combustible et la sortie étant reliée à une charge variable en parallèle avec la batterie, la pile à combustible étant formée d'une pluralité de cellules électrochimiques adaptés pour produire de l'électricité à partir d'un gaz combustible et d'un gaz oxydant.

### ARRIERE PLAN TECHNOLOGIQUE

On connaît des assemblages de blocs électrochimiques reliés en série (souvent appelés piles). Les blocs électrochimiques ainsi assemblés peuvent être constitués par exemple par des éléments d'accumulateur, ou encore par des cellules à combustible. Une cellule à combustible est un dispositif électrochimique prévu pour convertir l'énergie chimique directement en énergie électrique. Par exemple, un type de cellule à combustible inclus une anode et une cathode entre lesquelles est arrangée une membrane échangeuse de protons, souvent appelée membrane électrolyte polymère. Ce type de membrane permet de ne laisser passer que les protons entre l'anode et la cathode de la cellule à combustible. Au niveau de l'anode, de l'hydrogène diatomique subit une réaction afin de produire des ions H⁺ qui vont passer à travers la membrane électrolyte polymère. Les électrons produits par cette réaction rejoignent la cathode par un circuit externe à la cellule à combustible, produisant ainsi un courant électrique. Du fait qu'une seule cellule à combustible ne produit, en général, qu'une faible tension (environ 1 Volt), on assemble souvent les cellules à combustible en série de manière à constituer des piles de cellules à combustible capables de produire une tension plus élevée qui est l'addition des tensions de chaque cellule.

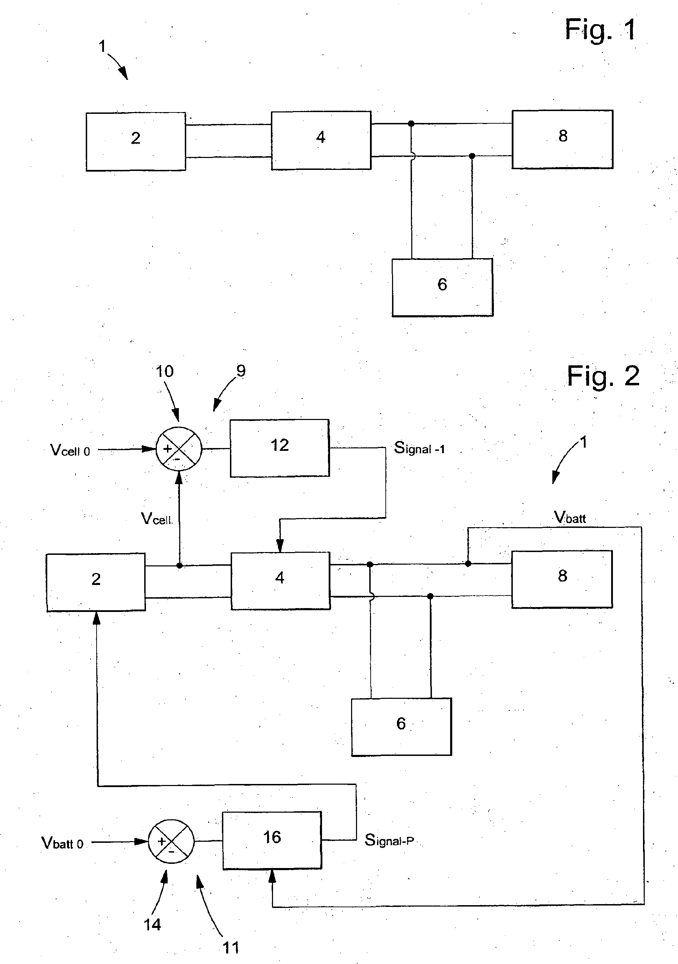

Ces piles à combustible sont, dans le cas d'une utilisation dans le secteur automobile, habituellement associées à une batterie afin de former un système hybride. Ce système connecte en parallèle la pile à combustible et la batterie de sorte que la pile à combustible et la batterie alimentent simultanément ou séparément la voiture, via une section commune appelée bus. Cette hybridation permet aussi à la pile à combustible de recharger la batterie. Un système hybride est dit « actif » lorsqu'il utilise un convertisseur DC/DC branché en sortie de la pile à combustible comme visible à la figure 1. Ce convertisseur DC/DC est utilisé pour adapter les niveaux de tension de la pile à combustible et de la batterie et pour réguler la puissance délivrée par la pile à combustible.

Or, cette régulation nécessite la mise en place d'une stratégie de commande pour, répartir la puissance entre la pile à combustible et la batterie en fonction de la demande de puissance du moteur électrique de la voiture et des contraintes du système. Les contraintes du système dont doit tenir compte la stratégie de commande sont les tensions et les courants maximum de la pile à combustible et de la batterie, les températures limites à ne pas dépasser, l'état de charge de la batterie c'est-à-dire, par exemple, qu'il ne faut pas charger la batterie lorsque celle-ci est déjà chargée à 100%, etc...

L'une des stratégies de commande d'un tel système hybride consiste à réguler l'état de charge de la batterie autour d'une valeur nominale sans jamais atteindre la limite maximale ou la limite minimale de ladite batterie. Ainsi, la batterie n'a jamais besoin d'être rechargée par l'extérieure, sa recharge étant assurée par la pile à combustible et éventuellement par la récupération de l'énergie cinétique du véhicule lorsque ce dernier est en phase de freinage. Cela revient à dire que la pile à combustible fournit la puissance moyenne consommée par le moteur électrique du véhicule alors que la batterie est utilisée comme moyen tampon énergétique en charge ou en décharge. Une telle stratégie est mise en oeuvre en régulant, à l'aide du convertisseur DC/DC, la tension du bus à une valeur constante.

Un inconvénient de cette stratégie connue est que rien n'est mis en oeuvre pour empêcher la pile à combustible de fonctionner dans une zone de tension dite « en circuit ouvert » ou OCV (Open Circuit Voltage. On entend par zone de tension « en circuit ouvert », la zone de fonctionnement dans laquelle la tension par cellule est supérieur à 0.85 - 0.9V/cellule. Une telle tension est connue pour réduire considérablement la durée de vie de la pile à combustible. Il n'est donc pas souhaitable que la pile fonctionne selon un tel mode.

Ce mode de fonctionnement en zone dite « en circuit ouvert » peut se produire dans le cas où la pile est commandée uniquement en courant à pression constante. Cette commande vient de l'idée consistant à réduire la pression de fonctionnement de la pile à combustible à faible puissance pour éviter la zone OCV. Il faut cependant considérer que la dynamique de variation de la pression est bien plus lente que la dynamique de variation du courant (de l'ordre de la seconde pour la pression et de la ms pour le courant). Il faut également considérer qu'une diminution de la pression dans la pile à combustible ne peut se faire que si un courant est consommé, et la valeur du courant influe directement sur la vitesse de réduction de la pression. Ainsi, si la puissance de la pile à combustible varie instantanément (ou rapidement) de quelque kilowatt à 0 kW, il ne sera pas possible d'éviter la zone OCV car il n'y aura plus de courant pour réduire la pression et la pile à combustible sera endommagée.

### RESUME DE L'INVENTION

Un but de la présente invention est de fournir un procédé de gestion du fonctionnement d'un système hybride, comprenant une pile à combustible et une batterie, qui permet d'optimiser les performances du système hybride et d'augmenter la durée de vie de la pile à combustible.

A cet effet, l'invention a pour objet un procédé de gestion du fonctionnement d'une alimentation en courant continu hybride conforme à la revendication 1 annexée,

Un avantage de la présente invention est de permettre une plus grande durée de vie de la pile à combustible. En effet, en optant pour une régulation différente selon que le système hybride se trouve en mode basse puissance ou en mode haute puissance, le système profite des avantages des deux modes de régulations tout en écartant leurs inconvénients. En effet, une régulation utilisant la variation de pression est avantageuse à basse puissance car une faible puissance signifie que le courant est faible. Ainsi, la différence de réactivité entre la variation de courant et la variation de pression ne se fait pas sentir sous faible puissance alors que sous forte puissance, c'est-à-dire avec un courant élevé, cette différence peut entraîner la mise en zone OCV du système hybride.

Des modes de réalisation avantageux du procédé selon la présente invention font l'objet de revendications dépendantes annexées.

Un premier mode de réalisation avantageux est définit par la revendication 2.

Dans un second mode de réalisation avantageux conforme à la revendication 3, la consigne représentative de la charge variable est la différence entre une troisième valeur de référence et la tension de batterie mesurée.

Dans un troisième mode de réalisation avantageux conforme à la revendication 4, la consigne représentative de la charge variable est la différence entre la puissance demandée par la charge variable et la puissance de sortie de la pile à combustible.

Dans un autre mode de réalisation avantageux, la seconde valeur critique est de 2.45 bar.

Dans un autre mode de réalisation avantageux, la première valeur critique prédéterminée est de 0.845 Volt.

Dans un autre mode de réalisation avantageux, la seconde valeur de référence est valeur de 0.85V par cellule.

Dans un autre mode de réalisation avantageux, la première valeur de référence est de 2.5 bar.

Dans un autre mode de réalisation avantageux, la pile à combustible utilise de l'hydrogène comme gaz combustible et de l'oxygène comme gaz oxydant.

La présente invention a également pour objet un système hybride comprenant une pile à combustible comprenant une pluralité de cellule en série utilisant un combustible réducteur et un oxydant pour fournir une tension de pile à combustible, et une batterie fournissant une tension de batterie, connectées en parallèle à une charge variable, la pile à combustible étant connecté à la charge variable par l'intermédiaire d'un convertisseur DC/DC qui pilote ladite pile à combustible. Le système hybride utilise, pour son fonctionnement, le procédé de fonctionnement qui fait l'objet de la présente invention.

Les documents EP 2 320 504 et EP 2241475 décrivent des procédés de gestion du fonctionnement d'une alimentation en courant continu hybride.

### BREVE DESCRIPTION DES FIGURES

Les buts, avantages et caractéristiques du système hybride selon la présente invention apparaitront plus clairement dans la description détaillée suivante d'au moins une forme de réalisation de l'invention donnée uniquement à titre d'exemple non limitatif et illustrée par les dessins annexés sur lesquels :
- La figure 1 représente de manière schématique un système hybride connu ;
- la figure 2 représente de manière schématique le système hybride fonctionnant selon un premier mode de fonctionnement conforme à la présente invention ;
- la figure 3 représente de manière schématique le système hybride fonctionnant selon un second mode de fonctionnement conforme à la présente invention ;
- la figure 4 représente de manière schématique des conditions de transition entre les deux modes de fonctionnement selon un mode de mise en oeuvre de la présente invention;
- la figure 5 représente une simulation du fonctionnement du système hybride avec le procédé selon la présente invention; et
- la figure 6 représente les points de fonctionnement de la pile à combustible lors du fonctionnement selon le mode de mise en oeuvre de la présente invention qui fait l'objet de la figure 4.

### DESCRIPTION DETAILLEE

Dans la description suivante, toutes les parties d'une pile à combustible connues d'un homme du métier dans ce domaine technique ne seront expliquées que de manière simplifiée.

Sur la figure 1, on a représenté de manière schématique un système hybride 1 conforme à la présente invention. Ce système hybride 1 comprend une pile à combustible 2 c'est-à-dire une pluralité de cellules électrochimiques montées en série. Cette pile à combustible 2 est alimentée par un combustible réducteur tel que de l'hydrogène et par un oxydant tel que de l'oxygène. La réaction du combustible réducteur et de l'oxydant entraîne la génération de tension de pile à combustible. Les gaz issues de la réaction du combustible réducteur et de l'oxydant peuvent être évacués via des circuits de recirculations équipés de pompes de recirculation. Le système hybride 1 comprend également des moyens de stockage d'énergie 6 tel qu'une ou plusieurs batteries. Dans le reste de la description, on considérera que ces moyens de stockage d'énergie électrique sont une batterie 6 mais rien n'empêche d'avoir plusieurs batteries. Cette batterie 6 fournit une tension de batterie et est branchée en parallèle de la pile à combustible 2 de sorte que la pile à combustible 2 et la batterie 6 soient toutes les deux connectées à une charge variable 8. Cette charge variable 8 peut être, par exemple, un moteur de voiture.

Ce système hybride 1 comprend également un convertisseur DC/DC 4 comprenant deux entrées et deux sorties. Aux deux entrées du convertisseur DC/DC 4 sont connectées les sorties de la pile à combustible 2, cela signifie donc que la tension fournie par la pile à combustible 2 entre dans le convertisseur DC/DC 4. Aux deux sorties du convertisseur DC/DC 4 sont connectées les points de connexion de la charge variable 8 et de la batterie 6.

Le convertisseur DC/DC 4 est également agencé pour contrôler le système hybride 1 car le convertisseur DC/DC 4 est capable d'adapter le niveau de tension de la pile à combustible 2 mais aussi celui de la batterie 6. De même le convertisseur DC/DC peut réguler la puissance délivrée par la pile à combustible 2.

En effet, le rôle du convertisseur DC/DC 4 est de piloter le système hybride 1 de sorte que la batterie 6 et la pile à combustible 2 fonctionne ensemble pour alimenter la charge 8. le convertisseur DC/DC a également pout but de répartir la puissance fournie par la pile à combustible entre la charge qui est le moteur dans le cadre d'une application automobile et la batterie. Ce pilotage du système hybride 1 est bien entendu soumis à des contraintes qui sont les tensions et courants limites de la pile à combustible 2, les tensions et courants limites de la batterie 6, les états de charge limites de la batterie 6, les températures limites à ne pas dépasser et autres.

Une stratégie de pilotage est de réguler l'état de charge de la batterie 6 autour d'une valeur nominale sans jamais atteindre sa limite de charge maximale ou minimale. En d'autres termes, la batterie n'a jamais besoin d'être rechargée de manière externe et sa recharge est assurée par la pile à combustible et par la récupération de l'énergie cinétique lors des phases de freinage dans le cas d'un véhicule. Une conséquence de cette stratégie est que la pile à combustible 2 répond à la demande de puissance moyenne du moteur et que la batterie 6 sert de tampon énergétique en charge ou en décharge. La mise en oeuvre de cette stratégie est réalisée par le convertisseur DC/DC 4.

Selon l'invention, le convertisseur DC/DC 4 est agencé pour que le système hybride 1 fonctionne selon deux modes de fonctionnement de sorte à éviter le mode dit « circuit ouvert ». On rappel que ce mode se manifeste lorsque puissance produite par la pile à combustible 2 est faible et se caractérise par une tension de cellule supérieure à 0.85V. Ce mode provoque alors une dégradation des cellules de la pile à combustible 2 et une diminution de sa durée de vie.

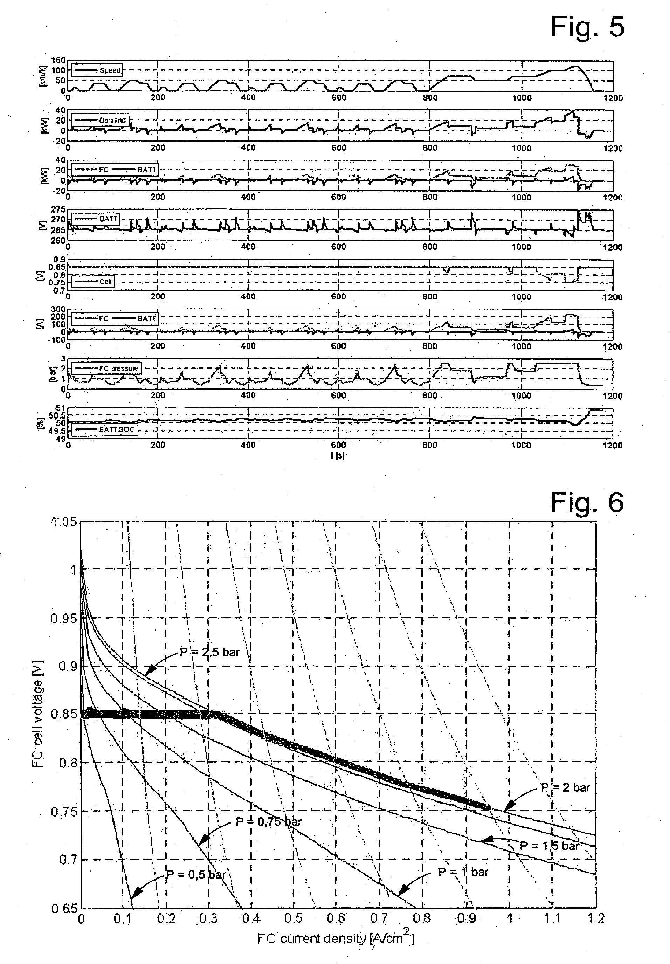

Or, une pile à combustible est caractérisée par une relation entre la tension aux bornes des cellules composant ladite pile et le courant qu'elle produit. En effet, chaque pile à combustible 2 se caractérise par une relation entre le courant et la tension de cellule c'est-à-dire que pour un courant donné, chaque cellule produit une tension dont la valeur est liée audit courant donné. On constate alors que la tension Vcell aux bornes des cellules diminue lorsque le courant augmente. Cette relation courant/ tension de cellule est d'autant plus complexe qu'elle dépend aussi de la pression. On entend par là que les performances de la pile à combustible 2 dépendant de la pression du combustible réducteur et de l'oxydant injecté dans ladite pile à combustible. Cette variation des performances en fonction de la pression a pour conséquence qu'il existe une relation courant/ tension de cellule pour chaque pression. A partir de la figure 6 représentant la caractéristique de la tension de cellule en fonction du courant pour différentes pressions, on constate que plus la pression est élevée et plus la pente de la courbe de la tension de cellule en fonction du courant est faible. De plus, on constate que, pour un courant donné, plus la pression P est élevée et plus la tension de cellule est élevée.

Le premier mode de fonctionnement correspond au mode de fonctionnement du système hybride 1 sous faible puissance. Ce premier mode de fonctionnement possède sa régulation spécifique qui consiste en une régulation de la tension de batterie 6 et de la tension de la pile à combustible 1. Cette régulation est opérée en utilisant une première 9 et une seconde 11 boucle de régulation visibles à la figure 2.

La première boucle de régulation 9 comprend un premier comparateur 10 comparant une seconde valeur de référence faisant office de consigne de tension de pile à combustible Vcell0 avec la tension de pile à combustible Vcell mesurée, c'est-à-dire la tension de sortie de la pile à combustible 2. On entend par la que la consigne de tension de pile à combustible Vcell0 est connectée à l'entrée positive du premier comparateur 10 et que la tension de pile à combustible Vcell mesurée est connectée à l'entrée négative du premier comparateur 10. La sortie de ce premier comparateur 10 est connectée à un premier contrôleur de tension 12. Ce premier contrôleur de tension 12 est agencé pour contrôler et analyser la donnée issue de la comparaison entre la consigne de tension de pile à combustible Vcell0 et la tension de pile à combustible Vcell mesurée et pour fournir une consigne Signal-1 au convertisseur DC/DC 4. Cette consigne Signal-1 commande la valeur du courant débité dans la pile à combustible 2. Ce courant agit sur l'impédance du convertisseur DC/DC 4 qui agit lui-même sur la tension de chaque cellule de la pile à combustible 2. De ce fait, la régulation du courant du convertisseur DC/DC 4 permet de réguler la tension de chaque cellule de la pile à combustible 2 à une valeur prédéterminée. Dans le présent exemple, on régulera la tension de chaque cellule à une seconde valeur référence de 0.85V par cellule qui est une valeur nominale de fonctionnement. Bien entendu, cette valeur peut être différente selon le type de pile à combustible utilisé. Cette régulation permet de protéger la pile à combustible de la zone de tension dite « en circuit ouvert »

La seconde boucle de régulation 11 est utilisée pour la variation de la puissance. Cette seconde boucle 11 comprend un second comparateur 14 comparant une consigne de tension de batterie Vbatt0 avec une tension de batterie mesurée Vbatt. On entend par la que la consigne de tension de batterie Vbatt0 est connectée à l'entrée positive du second comparateur 14 et que la tension de batterie mesurée Vbatt est connectée à l'entrée négative du second comparateur. La sortie de ce second comparateur 14 est connectée à un second contrôleur de tension 16. Ce second contrôleur de tension 16 est agencé pour analyser la donnée issue de la comparaison entre la consigne de tension de batterie Vbatt0 et la tension de batterie mesurée Vbatt et pour agir sur la pression de la pile à combustible. Pour cela, le second contrôleur de tension 16 fournit un signal Signal-P qui agit sur des vannes pour augmenter ou baisser la pression. Le fait d'agir sur la pression permet de maitriser la puissance de la pile à combustible 2 puisqu'à tension de cellule constante, le changement de pression implique le changement de courbe donnant la relation entre la tension aux bornes des cellules en fonction du courant. En augmentant la pression, on augmente le courant et inversement. La régulation de la tension de batterie Vbatt est utile pour la stratégie de commande du système hybride 1. En effet, la tension de batterie est régulée à sa valeur nominale de sorte que la batterie 6 n'a jamais besoin d'être rechargée par l'extérieure, sa recharge étant assurée par la pile à combustible 2 et par la récupération de l'énergie cinétique du véhicule lorsque ce dernier est en phase de freinage. La conséquence est que la pile à combustible 2 fournie la puissance moyenne du moteur électrique 8 du véhicule alors que la batterie 6 est utilisée comme moyen tampon énergétique en charge ou en décharge.

Ainsi, lors du fonctionnement en mode basse puissance ou Mode 1, la tension de cellule Vcell de la pile à combustible est régulée à une seconde valeur de référence valant 0.85V par cellule et la variation de la puissance se fait par variation de la pression. On obtient donc un mode de fonctionnement qui permet à la tension de cellule de ne pas être supérieure à 0.85V par cellule et donc de ne pas endommager ces dernières puisque la pile à combustible n'entre pas dans une zone de tension dite « en circuit ouvert ».

Toutefois, cette régulation de la tension de cellule de pile à combustible Vcell à une valeur constante diminue le rendement puisque la tension aux bornes de chaque cellule est bridée. Le rendement de la pile à combustible est maximal lorsque la pression P est maximale. Dans le cas présent, une baisse du rendement est acceptable car ce premier mode de fonctionnement se caractérise par une faible puissance. Il devient acceptable d'avoir un rendement plus faible dans ce premier mode de régulation étant donné que la dégradation du rendement à des conséquences limitées. Par exemple, pour une puissance maximale théorique de 500W dans ce premier mode de fonctionnement, un rendement qui passe de 90% à 85% ferait passer la puissance fournie de 450W à 425W.

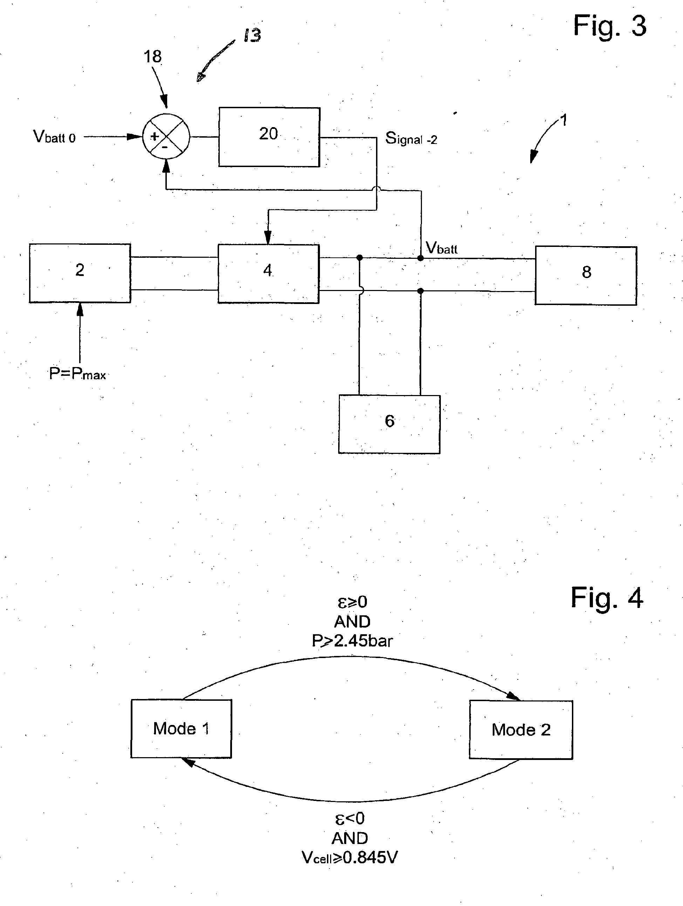

Le second mode de fonctionnement ou mode 2 correspond au mode de fonctionnement du système hybride 1 quand ce dernier fonctionne sous haute puissance. Ce second mode de fonctionnement consiste à imposer la pression P de la pile à combustible et à réguler la tension de cellule Vcell de la pile à combustible 2 visible à la figure 3

Dans ce second mode de fonctionnement, une troisième boucle de régulation 13, visible à la figure 3, est agencée. Elle comprend un troisième comparateur 18 comparant une consigne de tension de batterie Vbatt0 avec une tension de batterie mesurée Vbatt, c'est-à-dire la tension de sortie de la batterie. On entend par la, que la consigne de tension de batterie Vbatt0 est connectée à l'entrée positive du troisième comparateur 18 et que la tension de batterie mesurée Vbatt est connectée à l'entrée négative du troisième comparateur 18. La sortie de ce troisième comparateur 18 est connectée à un troisième contrôleur de tension 20. Ce troisième contrôleur de tension 20 est agencé pour analyser la donnée issue de la comparaison entre la consigne de tension de batterie Vbatt0 et la tension de batterie Vbatt mesurée et pour fournir un signal Signal-2 au convertisseur DC/DC 4. Ce signal Signal-2 a pour but de faire varier le courant de la pile à combustible 2 en agissant sur la tension de chaque cellule de la pile à combustible 2. cela permet en conséquence de protéger la batterie 6. Cette boucle de régulation 13 est similaire à la seconde boucle de régulation 11 utilisée pour la variation de pression P et donc de puissance dans le premier mode de fonctionnement. Il peut être envisagé dans une variante que la seconde boucle de régulation 11 et la troisième boucle de régulation 13 aient, comme éléments communs le comparateur de tension 18 ou 14 et le contrôleur de tension 16 ou 20. Ce dernier comprend des moyens de sélection pour fournir soit le signal Signal-1 dans le cas ou le système fonctionne selon le premier mode de fonctionnement, soit le signal Signal-2 dans le cas ou le système 1 fonctionne selon le second mode de fonctionnement. Cet agencement permet d'avoir moins de composant. Parallèlement à ce contrôle, la pression P du combustible réducteur c'est à dire l'hydrogène et la pression de l'oxydant c'est à dire l'oxygène sont maintenus constantes à un niveau de pression maximal Pmax. Cette pression maximale Pmax permet ainsi d'obtenir un rendement maximal de la pile à combustible 2.

Bien entendu, d'autres types de régulation peuvent être utilisés pour réaliser la méthode selon la présente invention et les exemples cités ne sont nullement limitatif.

On obtient donc un système hybride 1 fonctionnant sous deux modes de fonctionnement : un premier mode de fonctionnement où la tension est constante et la pression P est variable et un second mode de fonctionnement où la tension est variable et la pression P est constante. Ce système 1 permet à la fois de protéger la pile à combustible 2 d'une zone de tension dite « en circuit ouvert » lors du premier mode de fonctionnement mais aussi de protéger la batterie 6 d'une surcharge lors du second mode de fonctionnement. Par contre, de façon préférentielle, la protection de la batterie 6 sera prioritaire sur la protection de la pile à combustible 2 de sorte qu'en cas de retour de courant depuis la charge variable 8 vers le système hybride 1, ce courant sera envoyé vers la pile à combustible 2 et non pas dans la batterie 6. Cela s'explique par le danger que représente la surcharge d'une batterie 6. Notamment, pour une batterie 6 utilisée dans un système hybride 1 pour automobile, une surcharge de la batterie 6 peut entraîner une explosion de cette dernière. Pour des raisons de sécurité, on préférera donc endommager la pile à combustible 2 plutôt que la ou les batteries 6.

Ce système hybride 1, selon la présente variante, passe d'un mode de fonctionnement à un autre lorsque des conditions de transition sont réunies. Il existe ainsi deux conditions de transition, une première qui, lorsqu'elle est réalisée, fait passer le système hybride 1 du premier mode de fonctionnement au second mode de fonctionnement et une seconde qui, lorsqu'elle est réalisée, fait passer le système hybride 1 du second mode de fonctionnement au premier mode de fonctionnement.

La première transition utilise deux variables qui doivent satisfaire à deux conditions pour que le système hybride 1 puisse passer du premier au second mode de fonctionnement. La première de ces conditions est une condition de pression. Cette condition de pression n'est réalisée que lorsque la pression P dans la pile à combustible est supérieure ou égale à une seconde valeur critique 2.45 bar. En effet, dans le premier mode de fonctionnement dit basse puissance, la variation de la puissance se fait par variation de la pression P de sorte qu'une augmentation de la pression P entraîne une augmentation de la puissance et inversement. Or comme la tension aux bornes de chaque cellule est régulée à la seconde valeur de référence, ici 0.85V, on arrive à une limite de la puissance quand la pression P devient maximale. Néanmoins, cette limite n'est pas la puissance maximale que la pile à combustible 2 peut fournir. Il faut donc changer de mode de fonctionnement pour aller dans un mode de fonctionnement permet de fournir plus de puissance. Il s'agit du second mode de fonctionnement décrit auparavant.

Néanmoins, il est nécessaire d'avoir un signal permettant de signaler que davantage de puissance est demandée. Effectivement, si le passage du premier mode de fonctionnement vers le second mode de fonctionnement était effectué simplement lorsque la pression P atteint la pression maximale, des soucis de basculements intempestifs d'un mode à l'autre pourraient se produire lorsque le système hybride 1 souhaite fonctionner pour une puissance fournie lorsque la tension est égale à 0.85V et pour une pression P ayant la valeur de la pression maximale. Un pic de pression P entrainerait un tel basculement. Il faut donc mettre en place une condition supplémentaire représentative du besoin de puissance. Cette condition indique que le système hybride 1 doit fournir plus ou moins de puissance. Cette condition peut consister en la différence de tension ε entre la valeur de la tension de batterie de consigne Vbatt0 et la valeur de la tension de batterie mesurée Vbatt. Cette condition de tension est représentative de la puissance désirée puisque la charge de la batterie 6 est contrôlée de sorte que celle-ci ne soit jamais trop chargée. Ainsi, si la batterie 6 est suffisamment chargée, son besoin en puissance est moindre voir nulle et la puissance doit alors être diminuée. Dans le cas de la première transition, la condition de tension qui devient une condition de puissance sera remplie si la différence ε entre la tension de batterie de consigne Vbatt0 et la tension de batterie mesurée Vbatt est supérieure à zéro. Cela signifie que le système hybride 1 demande l'augmentation de la puissance. Ainsi, lorsque la première et la deuxième condition sont réalisées, la transition entre le premier mode de fonctionnement et le deuxième mode de fonctionnement est faite, le système hybride 1 se met à fonctionner selon le deuxième mode de fonctionnement qui permet de fournir plus de puissance au système hybride 1.

Dans le cas de la deuxième transition, il y a toujours deux conditions. Une première condition est la condition représentative du besoin de puissance c'est à dire la différence ε entre la tension de batterie 6 de consigne Vbatt0 et la tension de batterie mesurée Vbatt est inférieure à zéro. Cela signifie que le système hybride 1 cherche à diminuer la puissance. Cette condition de tension est associée à une deuxième condition qui est une condition de tension. Cette condition de tension n'est réalisée que lorsque la tension de chacune des cellules de la pile à combustible est supérieure ou égale à une première valeur critique qui est de 0.845V. En effet, en mode haute puissance, la variation de la puissance est faite en diminuant la tension aux bornes de chaque cellule. Dans ce mode, la pile à combustible 2 fonctionne en suivant la courbe de la tension de cellule en fonction du courant pour la pression maximale Pmax. Dans ce cas, plus la tension aux bornes de chaque cellule diminue, plus le courant et donc la puissance augmente. Au contraire, lorsque la tension aux bornes de chaque cellule augmente, le courant diminue et la puissance diminue également. En cas de baisse de la puissance, la tension aux bornes de chaque cellule augmente et cette baisse peut aller jusqu'à entraîner une tension aux bornes de chaque cellule s'approchant des 0.85V qui est la limite que l'on ne veut pas dépasser. Si le système hybride 1 souhaite une puissance encore plus faible, il doit passer dans le premier mode de fonctionnement. Ainsi, lorsque les premières et deuxièmes conditions sont réalisées, la transition entre le second mode de fonctionnement et le premier mode de fonctionnement est faite, le système hybride 1 fonctionnant selon le premier mode de fonctionnement.

Par contre, si la différence ε entre la tension de batterie de consigne Vbatt0 et la tension de batterie mesurée Vbatt est égale à zéro, le système hybride comprend que la puissance fournie est nécessaires. Par conséquent, le système hybride 1 fait en sorte que la valeur du courant et la valeur de la pression soient figées et maintenues constantes tant que la différence ε entre la tension de batterie de consigne Vbatt0 et la tension de batterie mesurée Vbatt est égale à zéro.

Les valeurs des premières et secondes valeurs critiques sont de 0.845V et 2.45 bar sont choisies différentes de 0.85V et 2.5 bar pour des raisons de sécurité. Effectivement une hystérésis est créée artificiellement pour éviter un changement de mode de fonctionnement intempestif. En effet, si la valeur de pression P de seuil est choisie à 2.5 bar, on aurait un changement de mode de fonctionnement si la pression descendrait à 2.495 bar. On considère alors que la tension de 0.845V et la pression de 2.45 bar peuvent être écrites 0.85V - x et 2.5bar - x avec x une valeur réglable. L'hystérésis permet de s'affranchir de ces petites variations et donc de rendre le procédé de fonctionnement plus stable. On comprendra que les valeurs des premières et secondes valeurs critiques, respectivement ,de 0.845V et 2.45 bar ne sont pas limitatives et que d'autres valeurs peuvent être choisies.

Bien entendu, la consigne de puissance n'est pas forcement la différence ε entre la tension de batterie de consigne Vbatt0 et la tension de batterie mesurée Vbatt est égale à zéro. Cette consigne de puissance peut être une consigne liée à la puissance mesurée en fonction du courant et de la tension produite par la pile à combustible 2. On peut également imaginer que cette consigne représentative du besoin de puissance soit la position de la pédale. Ainsi, si le système détecte que la pédale n'accélération n'est pas dans sa position de repos, il en déduit que de la puissance est nécessaire. Au contraire, si le système détecte que la pédale d'accélération est dans sa position de repos, le système 1 en conclut que le besoin de puissance est nulle et que cette dernière peut être baissée.

Les différentes étapes du procédé de gestion du fonctionnement selon l'invention sont :
a) Fournir un flux de gaz combustible et un flux de gaz oxydant à chacune des cellules électrochimiques afin que la réaction chimique produisant de l'électricité puisse se faire.
b) Définir une consigne représentative de la charge variable ou du besoin de puissance. Cette consigne peut être la différence entre une valeur ou consigne de tension de batterie prédéterminée et la tension de batterie mesurée.
c) Surveiller la pression de gaz combustible et la pression de gaz oxydant dans la pile à combustible 2 à l'aide de détecteur de pression. Cela permet de savoir en continu la pression dans la pile à combustible 2. Plusieurs capteurs permettent d'avoir une valeur moyenne de cette pression et donc d'avoir des valeurs de pressions plus fiables.
d) Réguler la pression dans la pile à combustible 2 à une première valeur de référence. La pression P dans la pile à combustible 2 est maintenue à sa valeur maximale Pmax afin de pouvoir obtenir sa puissance maximale de la pile à combustible. La première valeur de référence est de 2.5 bar.
e) Répartir la charge variable entre la pile à combustible 2et la batterie 6 en fonction de la consigne, en faisant varier la tension de sortie (Vcell) du convertisseur DC/DC 4. Le convertisseur DC/DC 4 agit sur les niveaux de tensions de la pile à combustible 2 et notamment sur la tension de sortie Vcell de la pile à combustible 2 qui est la somme des tensions aux bornes de chaque cellule. La variation de la tension aux bornes de chaque cellule permet d'avoir un courant défini et donc une puissance définie.
f) Surveiller une tension représentative de la tension aux bornes d'au moins une des cellules électrochimiques de la pile à combustible ou on peut également contrôler si la tension sortie de la pile à combustible dépasse une première valeur critique prédéterminée. On contrôle ici si la tension aux bornes de chaque cellule se rapproche de la valeur de 0.85V qui est la valeur maximale souhaitée pour cette tension. Dans le cas présent, la première valeur critique est de 0.845V.
g) surveiller si la consigne représentative du besoin de puissance indique que moins de puissance est demandée. Il s'agit de voir si le système réclame plus de puissance ou moins de puissance. Cette consigne peut être la différence entre la différence entre une valeur la tension de batterie de consigne Vbatt0 et la tension de batterie mesurée Vbatt ou la différence entre une valeur de puissance de consigne et la valeur de la puissance mesurée.
   si la tension représentative de la tension aux bornes d'au mois une des cellules dépasse une première valeur critique prédéterminée et si la consigne indique une diminution de la charge variable :
h) Interrompre l'étape de maintenir la pression dans la pile à combustible à une valeur de référence et interrompre l'étape de faire varier et réguler la puissance de sortie de la pile à combustible en faisant varier la tension de sortie de la pile à combustible par le convertisseur DC/DC.
i) Réguler la tension représentative de la tension aux bornes d'au mois une des cellules à une seconde valeur de référence en adaptant l'impédance d'entrée du convertisseur DC/DC. La seconde valeur de référence est 0.85V.
j) Répartir la charge variable entre la pile à combustible et la batterie en faisant varier la pression c'est à dire faire varier la puissance de sortie de la pile à combustible en faisant varier la pression. Lorsque la tension aux bornes de chaque cellule est constante, le réglage du courant qui permet de régler la puissance est dépendant de la pression. A chaque pression, il y a une courbe de la tension aux bornes de chaque cellule en fonction du courant. Sachant qu'à courant fixe, la tension aux bornes de chaque cellule augmente avec la pression et donc à tension aux bornes de chaque cellule fixe, le courant augmente avec la pression.
   si la pression dans la pile à combustible dépasse une seconde valeur critique prédéterminée et si la consigne indique une augmentation de la charge variable :
k) Interrompre l'opération (i) et interrompre l'opération (j) et Reprendre l'opération (d) et l'opération (e).

On peut alors voir à la figure 5 des courbes représentant les différentes variables caractéristiques du système hybride 1 lors d'une simulation de fonctionnement.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention défini par les revendications annexées.

## Revendications

1. Procédé de gestion du fonctionnement d'une alimentation en courant continu hybride, ladite alimentation comprenant une pile à combustible (2), une batterie (6) et un convertisseur DC/DC (4) comportant une entrée et une sortie, l'entrée du convertisseur (4) étant reliée à la sortie de la pile à combustible et la sortie étant reliée à une charge variable (8) en parallèle avec la batterie, la pile à combustible étant formée d'une pluralité de cellules électrochimiques adaptés pour produire de l'électricité à partir d'un gaz combustible et d'un gaz oxydant, **caractérisé en ce que** ledit procédé comprend les opérations suivantes :
a) Fournir un flux de gaz combustible et un flux de gaz oxydant à chacune des cellules électrochimiques ;
b) Définir une consigne représentative de la charge variable ;
c) Surveiller la pression de gaz combustible et la pression de gaz oxydant dans la pile à combustible ;
d) Réguler la pression (P) dans la pile à combustible à une première valeur de référence ;
e) Répartir la charge variable entre la pile à combustible (2) et la batterie (6) en fonction de la consigne, en faisant varier la tension de sortie (Vcell) du convertisseur DC/DC (4);
f) Surveiller une tension représentative de la tension aux bornes d'au moins une des cellules électrochimiques de la pile à combustible;
g) Surveiller la consigne ;
si la tension représentative de la tension aux bornes d'au mois une des cellules dépasse une première valeur critique prédéterminée et si la consigne indique une diminution de la charge variable :
h) Interrompre l'opération (d) et interrompre l'opération (e); et
i) Réguler la tension représentative de la tension aux bornes d'au mois une des cellules à une seconde valeur de référence en adaptant l'impédance d'entrée du convertisseur DC/DC;
j) Répartir la charge variable entre la pile à combustible et la batterie en faisant varier la pression.

2. Procédé de gestion selon la revendication 1 **caractérisé en ce qu'**il comprend en outre les opérations de :
si la pression dans la pile à combustible dépasse une seconde valeur critique prédéterminée et si la consigne indique une augmentation de la charge variable :
k) Interrompre l'opération (i) et interrompre l'opération (j) et Reprendre l'opération (d) et l'opération (e).

3. Procédé de gestion selon la revendication 1 ou 2, **caractérisé en ce que** la consigne représentative de la charge variable est la différence (ε) entre une troisième valeur de référence et la tension de batterie mesurée (Vbatt).

4. Procédé de gestion selon la revendication 1 ou 2, **caractérisé en ce que** la consigne représentative de la charge variable est la différence entre la puissance demandée par la charge variable et la puissance de sortie de la pile à combustible.

5. Procédé de gestion selon l'une des revendications 2, 3 dépendant de 2 ou 4 dépendant de 2, **caractérisé en ce que** la seconde valeur critique est de 2.45 bar.

6. Procédé de gestion selon l'une des revendications précédentes, **caractérisé en ce que** la première valeur critique prédéterminée est de 0.845 Volt.

7. Procédé de gestion selon l'une des revendications précédentes, **caractérisé en ce que** la seconde valeur de référence est valeur de 0.85V par cellule.

8. Procédé de gestion selon l'une des revendications précédentes, **caractérisé en ce que** la première valeur de référence est de 2.5 bar.

9. Procédé de gestion selon l'une des revendications précédentes, **caractérisé en ce que** la pile à combustible (2) utilise de l'hydrogène comme gaz combustible et de l'oxygène comme gaz oxydant.

10. Système de gestion d'une alimentation en courant continu hybride, ladite alimentation comprenant une pile à combustible (2), une batterie (6) et un convertisseur DC/DC (4) comportant une entrée et une sortie, l'entrée du convertisseur étant reliée à la sortie de la pile à combustible et la sortie étant reliée à une charge variable en parallèle avec la batterie (6), la pile à combustible étant formée d'une pluralité de cellules électrochimiques adaptées pour produire de l'électricité à partir d'un gaz combustible et d'un gaz oxydant, **caractérisé en ce que** ledit système est apte à fonctionner sous un premier mode de fonctionnement dans lequel la régulation est opérée par une première boucle de régulation (9) fournissant une première consigne (Signal-1) au convertisseur DC/DC (4) commandant la valeur du courant débité dans la pile à combustible, ladite première boucle comprenant un premier comparateur (10) comparant une consigne de tension de pile à combustible (Vcell0) avec une tension de pile à combustible (Vcell) mesurée, la sortie de ce premier comparateur étant connectée à un premier contrôleur de tension (12), et une seconde boucle de régulation 11 fournissant une seconde consigne (Signal-P) pour faire varier la pression de la pile à combustible, ladite seconde boucle de régulation comprenant un second comparateur (14) comparant une consigne de tension de batterie (Vbatt0) avec une tension de batterie mesurée (Vbatt), la sortie de ce second comparateur étant connectée à un second contrôleur de tension (16), et **en ce que** ledit système est apte à fonctionner sous un second mode de fonctionnement dans lequel la régulation est opérée par une troisième boucle de régulation 13 fournissant une troisième consigne (Signal-2) au convertisseur DC/DC pour faire varier le courant de la pile à combustible 2, la troisième boucle de régulation comprenant un troisième comparateur (18) comparant, une consigne de tension de batterie (Vbatt0) avec une tension de batterie mesurée (Vbatt), la sortie de ce troisième comparateur (18) étant connectée à un troisième contrôleur de tension (20).

## Patentansprüche

1. Verfahren zum Steuern des Betriebs einer Hybrid-Gleichstromversorgung, wobei die Versorgung eine Brennstoffzelle (2), eine Batterie (6) und einen Gleichstrom/Gleichstrom-Wandler (4), der einen Eingang und einen Ausgang besitzt, umfasst, wobei der Eingang des Wandlers (4) mit dem Ausgang der Brennstoffzelle verbunden ist und der Ausgang mit einer variablen Last (8) parallel zu der Batterie verbunden ist, wobei die Brennstoffzelle aus mehreren elektrochemischen Zellen gebildet ist, die dafür ausgelegt sind, Elektrizität anhand eines brennbaren Gases und eines oxidierenden Gases zu erzeugen, **dadurch gekennzeichnet, dass** das Verfahren die folgenden Operationen umfasst:
a) Liefern eines Stroms eines brennbaren Gases und eines Stroms eines oxidierenden Gases zu jeder der elektrochemischen Zellen;
b) Definieren eines Sollwerts, der die variable Last repräsentiert;
c) Überwachen des Drucks des brennbaren Gases und des Drucks des oxidierenden Gases in der Brennstoffzelle;
d) Regulieren des Drucks (P) in der Brennstoffzelle auf einen ersten Bezugswert;
e) Aufteilen der variablen Last zwischen der Brennstoffzelle (2) und der Batterie (6) als Funktion des Sollwerts, indem die Ausgangsspannung (Vcell) des Gleichstrom/Gleichstrom-Wandlers (4) variiert wird;
f) Überwachen einer Spannung, die die Spannung an den Anschlüssen wenigstens einer der elektrochemischen Zellen der Brennstoffzelle repräsentiert;
g) Überwachen des Sollwerts;
falls die Spannung, die die Spannung an den Anschlüssen wenigstens einer der Zellen repräsentiert, einen ersten vorgegebenen kritischen Wert überschreitet und falls der Sollwert eine Verringerung der variablen Last angibt:
h) Unterbrechen der Operation (d) und Unterbrechen der Operation (e); und
i) Regulieren der Spannung, die die Spannung an den Anschlüssen wenigstens einer der Zellen repräsentiert, auf einen zweiten Bezugswert, indem die Impedanz des Eingangs des Gleichstrom-Gleichstrom-Wandlers angepasst wird;
j) Aufteilen der variablen Last zwischen der Brennstoffzelle und der Batterie, indem der Druck variiert wird.

2. Steuerverfahren nach Anspruch 1, **dadurch gekennzeichnet, dass** es außerdem die folgenden Operationen umfasst:
falls der Druck in der Brennstoffzelle einen zweiten vorgegebenen kritischen Wert überschreitet und falls der Sollwert eine Erhöhung der variablen Last angibt:
k) Unterbrechen der Operation (i) und Unterbrechen der Operation (j) und erneutes Beginnen der Operation (d) und der Operation (e).

3. Steuerverfahren nach Anspruch 1 oder 2, **dadurch gekennzeichnet, dass** der Sollwert, der die variable Last repräsentiert, die Differenz (ε) zwischen einem dritten Bezugswert und der gemessenen Batteriespannung (Vbatt) ist.

4. Steuerverfahren nach Anspruch 1 oder 2, **dadurch gekennzeichnet, dass** der Sollwert, der die variable Last repräsentiert, die Differenz zwischen der von der variablen Last angeforderten Leistung und der Ausgangsleistung der Brennstoffzelle ist.

5. Steuerverfahren nach einem der Ansprüche 2, 3, wenn abhängig von Anspruch 2, oder 4, wenn abhängig von Anspruch 2, **dadurch gekennzeichnet, dass** der zweite kritische Wert 2,45 Bar beträgt.

6. Steuerverfahren nach einem der vorhergehenden Ansprüche, **dadurch gekennzeichnet, dass** der erste vorgegebene kritische Wert 0,845 Volt beträgt.

7. Steuerverfahren nach einem der vorhergehenden Ansprüche, **dadurch gekennzeichnet, dass** der zweite Bezugswert ein Wert von 0,85 V pro Zelle ist.

8. Steuerverfahren nach einem der vorhergehenden Ansprüche, **dadurch gekennzeichnet, dass** der erste Bezugswert 2,5 Bar beträgt.

9. Steuerverfahren nach einem der vorhergehenden Ansprüche, **dadurch gekennzeichnet, dass** die Brennstoffzelle (2) Wasserstoff als brennbares Gas und Sauerstoff als oxidierendes Gas verwendet.

10. System zum Steuern einer Hybrid-Gleichstromversorgung, wobei die Versorgung eine Brennstoffzelle (2), eine Batterie (6) und einen Gleichstrom/Gleichstrom-Wandler (4), der einen Eingang und einen Ausgang aufweist, umfasst, wobei der Eingang des Wandlers mit dem Ausgang der Brennstoffzelle verbunden ist und der Ausgang mit einer variablen Last parallel zu der Batterie (6) verbunden ist, wobei die Brennstoffzelle aus mehreren elektrochemischen Zellen gebildet ist, die dafür ausgelegt sind, Elektrizität anhand eines brennbaren Gases und eines oxidierenden Gases zu erzeugen, **dadurch gekennzeichnet, dass** das System in einer ersten Betriebsart arbeiten kann, in der die Regulierung durch eine erste Regulierungsschleife (9) erfolgt, die einen ersten Sollwert (Signal-1) zu dem Gleichstrom/Gleichstrom-Wandler (4) liefert, das den Wert des in der Brennstoffzelle fließenden Stroms steuert, wobei die erste Schleife einen ersten Komparator (10) umfasst, der einen Spannungssollwert (Vcell0) der Brennstoffzelle mit einer gemessenen Spannung (Vcell) der Brennstoffzelle vergleicht, wobei der Ausgang dieses ersten Komparators an eine erste Spannungssteuereinheit (12) angeschlossen ist, und eine zweite Regulierungsschleife (11) umfasst, die einen zweiten Sollwert (Signal-P) liefert, um den Druck der Brennstoffzelle zu variieren, wobei die zweite Regulierungsschleife einen zweiten Komparator (14) umfasst, der einen Sollwert (Vbatt0) der Batteriespannung mit einer gemessenen Batteriespannung (Vbatt) vergleicht, wobei der Ausgang dieses zweiten Komparators an eine zweite Spannungssteuereinheit (16) angeschlossen ist, und dass das System dafür ausgelegt ist, in einer zweiten Betriebsart zu arbeiten, in der die Regulierung durch eine dritte Regulierungsschleife (13) erfolgt, die einen dritten Sollwert (Signal-2) an den Gleichstrom/Gleichstrom-Wandler liefert, um den Strom der Brennstoffzelle (2) zu variieren, wobei die dritte Regulierungsschleife einen dritten Komparator (18) umfasst, der einen Sollwert der Batteriespannung (Vbatt0) mit einer gemessenen Batteriespannung (Vbatt) vergleicht, wobei der Ausgang dieses dritten Komparators (18) an eine dritte Spannungssteuereinheit (20) angeschlossen ist.

## Claims

1. Method for managing the operation of a hybrid continuous current supply, said supply comprising a fuel cell stack (2), a battery (6) and a DC/DC converter (4) including an input and an output, the converter (4) input being connected to the output of the fuel cell stack and the output being connected to a variable load (8) in parallel to the battery, the fuel cell stack being formed of a plurality of electrochemical cells adapted to produce electricity from a fuel and an oxidant gas, **characterized in that** said method includes the following operations.
a) Supplying a flow of fuel and a flow of oxidant gas to each of the electrochemical cells;
b) Defining a variable representative of the variable load;
c) Monitoring the fuel pressure and the oxidant gas pressure in the fuel cell stack;
d) Regulating the pressure (P) in the fuel cell stack at a first reference value;
e) Distributing the variable load between the fuel cell stack (2) and the battery (6) as a function of the variable, by varying the output voltage (Vcell) of the DC/DC converter (4);
f) Monitoring a voltage representative of the voltage at the terminals of at least one of the electrochemical cells of the fuel cell stack;
g) Monitoring the variable;
If the voltage representative of the voltage at the terminals of at least one of the cells exceeds a first predetermined critical value and if the variable indicates a decrease in the variable load:
h) Interrupting operation (d) and interrupting operation (e); and
i) Regulating the voltage representative of the voltage at the terminals of at least one of the cells at a second reference value by adapting the input impedance of the DC/DC converter;
j) Distributing the variable load between the fuel cell stack and the battery by varying pressure.

2. Management method according to claim 1, **characterized in that** the method further includes the operations of:
If the pressure in the fuel cell stack exceeds a second predetermined critical value and if the variable indicates an increase in the variable load:
k) Interrupting operation (i) and interrupting operation (j) and repeating operation (d) and operation (e).

3. Management method according to claim 1 or 2, **characterized in that** the variable representative of the variable load is the difference (ε) between a third reference value and the measured battery voltage (Vbatt).

4. Management method according to claim 1 or 2, **characterized in that** the variable representative of the variable load is the difference between the power required by the variable load and the output power of the fuel cell stack.

5. Management method according to any of claims 2, 3, dependent on 2 or 4, **characterized in that** the second critical value is 2.45 bar.

6. Management method according to any of the preceding claims, **characterized in that** the first predetermined critical value is 0.845 volts.

7. Management method according to any of the preceding claims, **characterized in that** the second reference value is a value of 0.85 volts per cell.

8. Management method according to any of the preceding claims, **characterized in that** the first reference value is 2.5 bar.

9. Management method according to any of the preceding claims, **characterized in that** the fuel cell stack (2) uses hydrogen as fuel and oxygen as oxidant gas.

10. System for managing a hybrid continuous current supply, said supply comprising a fuel cell stack (2), a battery (6) and a DC/DC converter (4) including an input and an output, the converter input being connected to the fuel cell stack output and the output being connected to a variable load in parallel with the battery (6), the fuel cell stack being formed of a plurality of electrochemical cells adapted to produce electricity from a fuel and an oxidant gas, **characterized in that** said system is able to operate in a first operating mode wherein regulation is performed by a first regulation loop (9) supplying a first variable (Signal-1) to the DC/DC converter (4) controlling the charged current value in the fuel cell stack, said first loop including a first comparator (10) comparing a voltage variable (Vcell0) of the fuel cell stack to a measured voltage (Vcell) of the fuel cell stack, the output of said first comparator being connected to a first voltage controller (12), and a second regulation loop (11) supplying a second variable (Signal-P) for varying the fuel cell stack pressure, said second regulation loop including a second comparator (14) comparing a battery voltage variable (Vbatt0) to a measured battery voltage (Vbatt), the output of said second comparator being connected to a second voltage controller (16), and **in that** said system is able to operate in a second operating mode wherein regulation is performed by a third regulation loop (13) supplying a third variable (Signal-2) to the DC/DC converter to vary the current of the fuel cell stack (2), the third regulation loop including a third comparator (18) comparing a battery voltage variable (Vbatt0) to a measured battery voltage (Vbatt), the output of said third comparator (18) being connected to a third voltage controller (20).
